# EUROPÄISCHE PATENTSCHRIFT

(11) **EP 3 976 977 B1**
(45) Veröffentlichungstag und Bekanntmachung des Hinweises auf die Patenterteilung: **06.11.2024**
(21) Anmeldenummer: 20726382.3
(22) Anmeldetag: 14.05.2020
(51) Int. Cl.: F16B 19/00

(54) **VERBINDUNGSELEMENT**
CONNECTING ELEMENT
ÉLÉMENT DE LIAISON

(30) Priorität: 24.05.2019 DE 102019207681
(43) Veröffentlichungstag der Anmeldung: 06.04.2022
(73) Patentinhaber: Arnold Umformtechnik GmbH & Co. KG, 74670 Forchtenberg-Ernsbach (DE)
(72) Erfinder: LUTZ, Florian, 74670 Sindringen (DE)
(74) Vertreter: Patentanwälte Ruff, Wilhelm, Beier, Dauster & Partner mbB
(86) Internationale Anmeldenummer: PCT/EP2020/063464
(87) Internationale Veröffentlichungsnummer: WO 2020/239460

(56) Entgegenhaltungen:
- DE-A1- 102009 053 852

## Beschreibung

Die Erfindung betrifft ein Verbindungselement zum Einpressen oder Einbetten in ein Bauteil mit einem Schaft, der sich entlang einer Mittellängsachse des Verbindungselements erstreckt, wobei der Schaft mit sich in radialer Richtung zum Schaft erstreckenden Rippen versehen ist und wobei der Schaft wenigstens abschnittsweise einen polylobularen Querschnitt aufweist, wobei der Umfang des polylobularen Querschnitts über seine gesamte Länge konvex gekrümmt ist, insbesondere zwischen einem Umkreis und einem Inkreis angeordnet ist und, in radialer Richtung gesehen, Bereiche mit größerem Radius oder kleinerer Krümmung und Bereiche mit kleinerem Radius oder größerer Krümmung aufweist.

Aus der deutschen Offenlegungsschrift DE 10 2009 053 852 A1 ist ein Verbindungselement zum Einpressen mit mehreren, sich in radialer Richtung zum Schaft erstreckenden umlaufenden Rippen bekannt. Der Schaft kann einen polygonalen Querschnitt mit abgerundeten Ecken haben.

Mit der Erfindung soll ein Verbindungselement zum Einpressen oder Einbetten in ein Bauteil hinsichtlich einer Verankerung in dem Bauteil verbessert werden.

Erfindungsgemäß ist hierzu ein Verbindungselement mit den Merkmalen von Anspruch 1 vorgesehen. Bei einem Verbindungselement zum Einpressen oder Einbetten in ein Bauteil mit einem Schaft, der sich entlang einer Mittellängsachse des Verbindungselements erstreckt, wobei der Schaft mit sich in radialer Richtung zum Schaft erstreckenden Rippen versehen ist und wobei der Schaft wenigstens abschnittsweise einen polylobularen Querschnitt aufweist, wobei der Umfang des polylobularen Querschnitts über seine gesamte Länge konvex gekrümmt ist, insbesondere zwischen einem Umkreis und einem Inkreis angeordnet ist, und, in radialer Richtung gesehen, Bereiche mit größerem Radius oder kleinerer Krümmung und Bereiche mit kleinerem Radius oder größerer Krümmung aufweist, ändert sich, entlang der Mittellängsachse gesehen, eine Winkellage der Bereiche mit kleinerem Radius und der Bereiche mit größerem Radius entlang des Schafts. Mit anderen Worten verwindet sich, über die Länge des Schafts gesehen, der polylobulare Querschnitt des Schafts. Dadurch kann erreicht werden, dass, entlang der Mittellängsachse des Schafts gesehen, die sich bis zum Umkreis des polylobularen Querschnitts erstreckenden Bereiche mit kleinerem Radius zueinander versetzt sind. Diese, nach außen vorragenden Bereiche mit kleinerem Radius sind vorrangig für die Verankerung des Verbindungselements in einem Bauteil verantwortlich. Beim Einpressen oder Einbetten des erfindungsgemäßen Verbindungselements in ein Bauteil kann nun erreicht werden, dass die in radialer Richtung vorragenden Bereiche mit kleinerem Radius sich in der Projektion oder entlang der Mittellängsachse gesehen nicht überlappen oder nicht fluchten. Dadurch kann eine höhere Auspresskraft erzielt werden. Dies ist insbesondere dann von großem Vorteil, wenn das erfindungsgemäße Verbindungselement eingepresst wird. Denn die Bereiche mit kleinerem Radius der einzelnen Rippen des Schafts weisen zumindest teilweise eine unterschiedliche Winkellage auf. Der bei konventionellen Verbindungselementen auftretende Effekt, dass diese vorragenden Bereiche mit kleinerem Radius Material des Bauteils in radialer Richtung wegdrücken, das dann für die Verankerung nachfolgender Rippen nicht mehr zur Verfügung steht, tritt bei dem erfindungsgemäßen Verbindungselement nicht auf. Gerade dann, wenn konventionelle Verbindungselemente zum Einpressen in Aluminium eingepresst werden, ist zu beobachten, dass das Material nur wenig in eine Querrändelung fließt und zum Großteil nur abgeschert und weggeschoben wird. Dadurch sind nur die ersten Querrändelgänge, die vorne am Schaft liegen, mit Material des Bauteils belegt, wodurch die Auspresskraft relativ gering ist. Darüber hinaus hängt die Auspresskraft bei konventionellen Verbindungselementen zum Einpressen in hohem Maße von der Toleranz des Kernlochs ab. Erfindungsgemäß ist der polylobulare Querschnitt des Schafts entlang der Schaftachse verwunden, beispielsweise wendelförmig verdreht. Dadurch liegen die Hochpunkte der Rändelung, die durch die Bereiche mit kleinem Radius des Querschnitts gebildet werden, nicht mehr in einer Flucht. Dadurch können auch weiter hinten liegende Rändel bzw. Querrändel noch Material aufnehmen, welches noch nicht weggeschoben wurde. Dadurch kann der Gesamtfüllgrad der Rändelung bzw. der Rippen und damit die Auspresskraft beim Einpressen oder Einbetten in ein Bauteil erheblich verbessert werden. Dies ist insbesondere bei Bauteilen aus Aluminium oder Kunststoff der Fall. Das Verhältnis des kleineren Radius zu dem größeren Radius ändert sich mit der Abmessung, also der maximalen Querabmessung, des Schafts.

In Weiterbildung der Erfindung ändert sich die Winkellage der Bereiche mit kleinerem Radius und der Bereiche mit größerem Radius um einen konstanten Betrag pro Längeneinheit entlang des Schafts.

Auf diese Weise ergibt sich eine wendelförmige Verdrehung des polylobularen Querschnitts des Schafts mit konstanter Steigung.

In Weiterbildung der Erfindung weist der polylobulare Querschnitt n Bereiche mit kleinerem Radius auf und die Winkellage ändert sich entlang der vollständigen Länge des Schafts um einen Winkel von 360°/n.

Auf diese Weise kann erreicht werden, dass die Bereiche mit kleinerem Radius entlang der vollständigen Länge des Schafts nicht in einer Flucht liegen. Dadurch lassen sich besonders hohe Auspresskräfte und damit eine sehr sichere Verankerung der Verbindungselemente erzielen.

In Weiterbildung der Erfindung wechseln sich entlang der Länge des Schafts gesehen Bereiche mit unterschiedlichen polylobularen Querschnitten ab.

In Weiterbildung der Erfindung wechseln sich entlang der Länge des Schafts gesehen Bereiche mit kreisrundem Querschnitt und polylobularem Querschnitt ab.

In Weiterbildung der Erfindung weist in dem Abschnitt des Schafts mit polylobularem Querschnitt der Schaft an jeder Stelle dieses Abschnitts einen polylobularen Querschnitt auf.

Sowohl der Außendurchmesser des Schafts als auch der Kerndurchmesser des Schafts sind dabei polylobular ausgestaltet. Auf diese Weise kann der Schaft mit den Rippen stabil ausgebildet werden.

In Weiterbildung der Erfindung weist in dem Abschnitt des Schafts mit polylobularem Querschnitt bei jeder Winkellage um die Mittellängsachse eine Schnittansicht des Schafts eine wellenförmige Außenkontur auf.

Die wellenförmige Außenkontur in einer Schnittebene, die die Mittellängsachse enthält, sorgt für eine sichere Verankerung des Verbindungselements in dem umgebenden Material. Dies wird gemäß der Erfindung über den gesamten Umfang des Verbindungselements realisiert. Vorteilhafterweise verläuft in dieser Schnittebene auch eine gedachte Linie, die die tiefsten oder am nächsten an der Mittellängsachse gelegenen Punkte zwischen zwei Rippen verbindet, ebenfalls wellenförmig.

In Weiterbildung der Erfindung ändert sich in dem Abschnitt des Schafts mit polylobularem Querschnitt eine Profiltiefe der Rippen um maximal 50 %.

Auch auf diese Weise kann ein sicherer Halt des Verbindungselements im eingepressten Zustand sichergestellt werden.

In Weiterbildung der Erfindung ändert sich in dem Abschnitt des Schafts mit polylobularem Querschnitt eine Profiltiefe der Rippen um maximal 10 %, insbesondere ist die Profiltiefe konstant.

Eine solche geringe Änderung der Profiltiefe oder eine konstante Profiltiefe sorgt für einen sicheren Halt des Verbindungselements im eingepressten Zustand.

In Weiterbildung der Erfindung ist der Querschnitt als Gleichdick ausgebildet.

Eine in radialer Richtung gemessene Querabmessung des polylobularen Querschnitts ist dadurch unabhängig von der Winkellage immer gleich. Dies erleichtert die Herstellung des Verbindungselements mittels Walzwerkzeugen, insbesondere Walzbacken.

In Weiterbildung der Erfindung weist der Querschnitt drei Bereiche mit kleinerem Radius oder größerer Krümmung und drei Bereiche mit größerem Radius oder kleinerer Krümmung auf.

Über den Umfang gesehen weist der Querschnitt also drei nach außen vorragende Bereiche auf, nämlich die Bereiche mit kleinerem Radius oder größerer Krümmung, deren Scheitelpunkt auf dem Umkreis liegt, und der Querschnitt weist drei Bereiche mit größerem Radius oder kleinerer Krümmung auf, deren Scheitelpunkt auf dem Inkreis liegt. Die Bereiche mit kleinerem Radius und die Bereiche mit größerem Radius sind gleichmäßig voneinander beabstandet. Ein solcher Querschnitt lässt sich mittels Walzverfahren, insbesondere mittels Walzbacken, mit hoher Präzision und in hohen Stückzahlen kostengünstig herstellen.

In Weiterbildung der Erfindung ist der Umfang des Querschnitts kontinuierlich ohne Ecken ausgebildet.

Auch dies erleichtert die Herstellung des erfindungsgemäßen Verbindungselements.

In Weiterbildung der Erfindung verlaufen die Rippen wenigstens teilweise in Umfangsrichtung.

Mittels Rippen in Umfangsrichtung können hohe Auspresskräfte erzielt werden.

In Weiterbildung der Erfindung ändert sich die Winkellage der Bereiche mit kleinerem Radius oder größerer Krümmung und der Bereiche mit größerem Radius oder kleinerer Krümmung in Längsrichtung des Schafts gesehen bei jeder Rippe um etwa 10° bis 40°.

Auf diese Weise kann nach etwa zehn Rippen eine vollständige Umdrehung der Winkellage der Bereiche mit kleinerem Radius und der Bereiche mit größerem Radius erzielt werden. Auch bei vergleichsweise kurzen Schäften von Verbindungselementen lassen sich dadurch hohe Auspresskräfte erzielen. Die Winkellage der Bereiche mit kleinerem Radius und der Bereiche mit größerem Radius kann sich auch pro Millimeter Länge des Schafts um etwa 10° bis 40°, ändern.

In Weiterbildung der Erfindung verlaufen die Rippen wenigstens teilweise in axialer Richtung.

Mittels in axialer Richtung verlaufender Rippen lässt sich eine zuverlässige Verdrehsicherung des Verbindungselements in dem Bauteil erzielen.

In Weiterbildung der Erfindung verlaufen die Rippen über wenigstens einen Teilbereich der Länge des Schafts in Umfangsrichtung und die Rippen verlaufen über wenigstens einen Teilbereich der Länge des Schafts in axialer Richtung.

Auf diese Weise lässt sich eine äußerst sichere Verankerung des Verbindungselements sowohl in Umfangsrichtung als auch in Längsrichtung des Schafts erzielen. Es kann dabei entweder ein Teilbereich mit in axialer Richtung verlaufenden Rippen oder ein Teilbereich mit in Umfangsrichtung verlaufenden Rippen mit dem polylobularen Querschnitt und der sich ändernden Winkellage der Bereiche mit kleinerem Radius oder größerer Krümmung und der Bereiche mit größeren Radius oder kleinerer Krümmung versehen sein oder sowohl der Teilbereich mit Rippen in Umfangsrichtung als auch der Teilbereich mit Rippen in axialer Richtung können entsprechend einen polylobularen Querschnitt aufweisen.

In Weiterbildung der Erfindung verlaufen die Rippen wenigstens über einen Teilbereich der Länge des Schafts in Umfangsrichtung und die Winkellage der Bereiche mit kleinerem Radius oder größerer Krümmung und der Bereiche mit größerem Radius oder kleinerer Krümmung ändert sich ausgehend von einer ersten Rippe abwechselnd in positiver Richtung und in negativer Richtung.

Die Richtung, in der sich die Winkellage ändert, kann sich dabei von Rippe zu Rippe ändern oder es können beispielsweise auch mehrere Rippen nacheinander mit einer Änderung in positiver Richtung auftreten und dann eine oder mehrere Rippen mit einer Änderung in negativer Richtung. Durch Abwechseln der Richtung, in der sich die Winkellage ändert, kann ein Fluchten der Bereiche mit größerem Radius und der Bereiche mit kleinerem Radius über die Länge des Schafts entweder vollständig vermieden werden oder so eingestellt werden, dass erst nach einer größeren Rippenzahl wieder ein Fluchten auftritt. Dadurch kann eine Auspresskraft des erfindungsgemäßen Verbindungselements erhöht werden.

In Weiterbildung der Erfindung ändert sich die Winkellage der Bereiche mit kleinerem Radius und der Bereiche mit größerem Radius entlang der Mittellängsachse gesehen im Uhrzeigersinn und/oder entgegen dem Uhrzeigersinn.

In Weiterbildung der Erfindung ist das Verbindungselement wenigstens abschnittsweise aus Stahl, Aluminium, Kupfer oder Messing ausgebildet.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen können dabei in beliebiger Weise miteinander kombiniert werden, ohne den Rahmen der Erfindung zu überschreiten. Dies gilt auch für die Kombination von Einzelmerkmalen ohne weitere Einzelmerkmale, mit denen sie im Zusammenhang beschrieben oder gezeigt sind. In den Zeichnungen zeigen:
- Fig. 1: eine Seitenansicht eines erfindungsgemäßen Verbindungselements gemäß einer ersten Ausführungsform,
- Fig. 2: eine Vorderansicht des Verbindungselements der Fig. 1,
- Fig. 3: eine Schnittansicht auf die Schnittebene A-A in Fig. 1,
- Fig. 4: eine Schnittansicht auf die Ebene B-B in Fig. 1,
- Fig. 5: eine isometrische Darstellung des Verbindungselements der Fig. 1 von schräg oben,
- Fig. 6: eine Seitenansicht eines erfindungsgemäßen Verbindungselements gemäß einer weiteren Ausführungsform,
- Fig. 7: eine isometrische Darstellung des Verbindungselements der Fig. 6 von schräg oben,
- Fig. 8: eine isometrische Darstellung eines erfindungsgemäßen Verbindungselements gemäß einer weiteren Ausführungsform von schräg oben,
- Fig. 9: eine Seitenansicht des Verbindungselements der Fig. 8,
- Fig. 10: eine Vorderansicht des Verbindungselements der Fig. 8,
- Fig. 11: eine Ansicht auf die Schnittebene A-A in Fig. 9,
- Fig. 12: eine Ansicht auf die Schnittebene B-B in Fig. 9,
- Fig. 13: eine Ansicht auf die Schnittebene C-C in Fig. 9,
- Fig. 14: eine isometrische Darstellung eines erfindungsgemäßen Verbindungselements gemäß einer weiteren Ausführungsform von schräg hinten,
- Fig. 15: eine Seitenansicht des Verbindungselements der Fig. 14,
- Fig. 16: eine Ansicht auf die Schnittebene A-A in Fig. 15,
- Fig. 17: eine schematische, abschnittsweise Darstellung einer Umfangsabwicklung einer weiteren Ausführungsform eines erfindungsgemäßen Verbindungselements,
- Fig. 18: eine schematische, abschnittsweise Darstellung einer Umfangsabwicklung eines Verbindungselements gemäß einer weiteren Ausführungsform,
- Fig. 19: eine schematische Darstellung einer Umfangsabwicklung eines Verbindungselements gemäß einer weiteren Ausführungsform der Erfindung,
- Fig. 20: eine Ansicht eines Verbindungselements gemäß einer weiteren Ausführungsform der Erfindung von unten,
- Fig. 21: eine Ansicht auf die Schnittebene A-A in Fig. 20,
- Fig. 22: eine Ansicht auf die Schnittebene B-B in Fig. 20,
- Fig. 23: eine Ansicht auf die Schnittebene C-C in Fig. 20,
- Fig. 24: eine Seitenansicht des Verbindungselements der Fig. 20,
- Fig. 25: eine Ansicht auf die Schnittebene A-A in Fig. 24 und
- Fig. 26: eine Ansicht auf die Schnittebene B-B in Fig. 24.

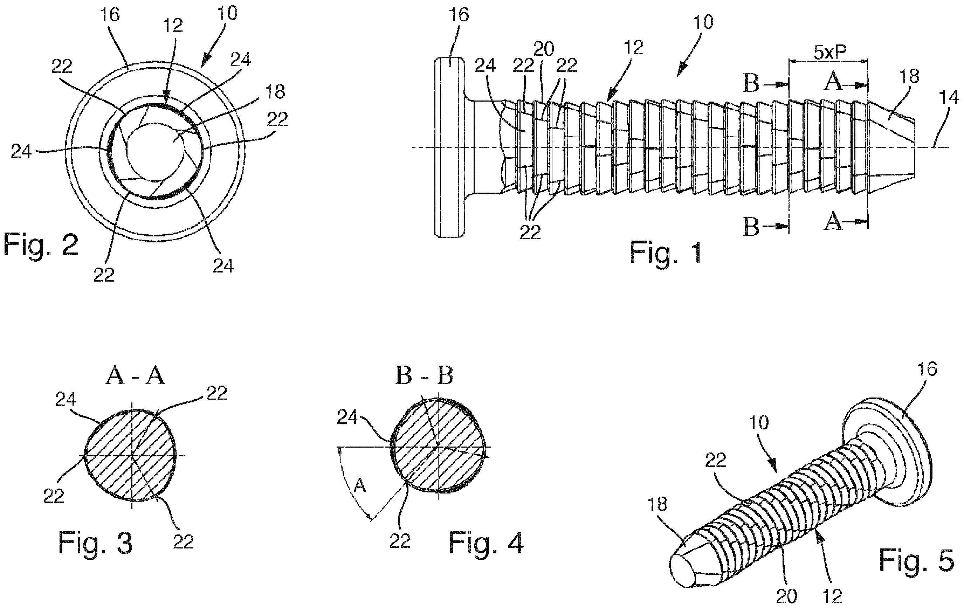

Fig. 1 zeigt ein erfindungsgemäßes Verbindungselement 10 gemäß einer ersten Ausführungsform der Erfindung. Das Verbindungselement 10 ist zum Einpressen oder Einbetten in ein nicht dargestelltes Bauteil vorgesehen und weist einen Schaft 12 auf, der sich entlang einer Mittellängsachse 14 des Verbindungselements 10 erstreckt. An einem, in Fig. 1 links dargestellten Ende des Schafts 12 ist ein Kopf 16 des Verbindungselements 10 vorgesehen, der gegenüber dem Schaft 12 einen größeren Durchmesser aufweist. Der Kopf 16 ist scheibenartig ausgebildet. Der Kopf 16 kann auf seiner in Fig. 1 links dargestellten Seite mit einer Antriebsausbildung versehen sein, üblicherweise ist aber keine Antriebsausbildung am Kopf 16 vorgesehen, da das Verbindungselement 10 zum Einpressen oder Einbetten in ein Bauteil vorgesehen ist.

An dem in Fig. 1 rechts dargestellten Ende weist der Schaft 12 eine kegelstumpfförmige Verjüngung 18 auf, die das Einfädeln in ein Kernloch erleichtert.

Der Schaft 12 ist mit zahlreichen sich in radialer Richtung erstreckenden Rippen 20 versehen. Die Rippen 20 verlaufen in Umfangsrichtung und haben jeweils, wie in Fig. 1 zu erkennen ist, einen dreieckartigen Querschnitt. Eine Höhe der Rippen, die entlang der Mittellängsachse 14 gemessen wird, ist bei allen Rippen gleich. Die Rippen 20 sind jeweils kegelstumpfförmig ausgebildet, wobei eine Seite mit kleinerem Durchmesser jeder Rippe 20 dem freien Ende 18 des Schafts 12 zugewandt ist, also in Einpressrichtung des Verbindungselements 10 liegt. Zur Seite des Kopfs 16 hin schließt sich an den kegelstumpfförmigen Abschnitt jeder Rippe 20 ein deutlich kürzerer Abschnitt an, der annährend senkrecht zur Mittellängsachse 14 liegt und in dem eine Durchmesserverringerung stattfindet. Der Durchmesser des in Fig. 1 links liegenden Endes jeder Rippe und der Durchmesser des in Fig. 1 rechts liegenden Endes jeder Rippe 20 ist etwa gleich. Insgesamt weist der Schaft 12 dadurch im Bereich der Rippen 20 eine sägezahnartige Außenkontur auf. Der Schaft 12 lässt sich dadurch in ein Kernloch eines Bauteils einpressen. Das Ausziehen des Schafts 12 aus dem Kernloch des Bauteils ist durch die sägezahnartige Gestaltung der Außenkontur des Schafts 12 mit den Rippen 20 dahingegen stark erschwert. Dies deshalb, da sich die Rippen 20 beim Ausziehen des Verbindungselements 10 aus einem Kernloch, in Fig. 1 also nach links, in das sie umgebende Material der Wandung des Kernlochs eingraben.

Fig. 2 zeigt eine Vorderansicht des Verbindungselements 10 der Fig. 1, wobei der Blick in Fig. 2 auf das kegelstumpfförmig verjüngte Ende 18 des Schafts 12 gerichtet ist. Es ist in dieser Ansicht zu erkennen, dass ein Querschnitt des Schafts 12 nicht kreisförmig ist, sondern polylobular mit drei nach außen vorragenden Bereichen und drei die nach außen vorragenden Bereiche verbindenden Bereichen. Ein solcher Querschnitt kann auch als trilobular bezeichnet werden. Der Querschnitt des Schafts 12 weist einen Umfang mit drei gleichmäßig um jeweils 120° voneinander beabstandeten Bereichen 22 mit kleinerem Radius oder größerer Krümmung auf. Diese Bereiche 22 mit kleinerem Radius bilden die in radialer Richtung vorragenden Bereiche des Umfangs des Querschnitts des Schafts 12. Zwischen den Bereichen 22 mit kleinerem Radius sind jeweils Bereiche 24 mit größerem Radius oder kleinerer Krümmung angeordnet, die zwangsläufig ebenfalls gleichmäßig voneinander beabstandet sind, speziell in einem Winkel von 120° zueinander. Diese Bereiche 24 mit größerem Radius verbinden die nach außen vorragenden Bereiche 22 mit kleinerem Radius. Der Umfang des Querschnitts des Schafts 12 ist durchgehend konvex gekrümmt und weist keine Ecken oder Kanten auf. Der in Fig. 2 erkennbare Umfang des Schafts 12 entspricht dem Querschnitt im Bereich der Schnittebene A-A in Fig. 1.

In Fig. 1 sind die Scheitelpunkte der Bereiche 22 mit kleinerem Radius an jeder Rippe 20 mittels Strichen schematisch angedeutet. Es ist zu erkennen, dass die Bereiche mit kleinerem Radius 22 in Längsrichtung des Schafts 12 gesehen, also in Richtung der Mittellängsachse 14, ihre Winkellage ändern. In Richtung vom Kopf 16 zum Ende 18 des Schafts 12 wird der Querschnitt des Schafts 12 mit jeder Rippe 20 ein Stück weit im Uhrzeigersinn verdreht. Die Bereiche 22 mit kleinerem Radius sind dadurch, wie Fig. 1 zu entnehmen ist, so angeordnet, dass eine durch die Bereiche 22 mit kleinerem Radius gelegte Linie eine Wendel um den Schaft 12 herum bildet. Dies ergibt sich dadurch, dass von Rippe 20 zu Rippe 20 die Winkellage der Bereiche 22 mit kleinerem Radius und infolgedessen auch die Winkellage der Bereiche 24 mit größerem Radius um einen konstanten Betrag geändert wird.

Fig. 3 zeigt eine Ansicht auf die Schnittebene A-A in Fig. 1. Zu erkennen ist, dass die Bereiche 22 mit kleinerem Radius in einem Winkel von 120° voneinander beabstandet sind und dass der in Fig. 3 links dargestellte Bereich 22 mit kleinerem Radius einen Winkel von 0° zu einer horizontal verlaufenden Achse einnimmt.

Fig. 4 zeigt eine Ansicht auf die Schnittebene B-B in Fig. 1. Die Schnittebene B-B ist im Abstand von 5 x P von der Schnittebene A-A angeordnet, also im Abstand von fünfmal der Höhe jeder Rippe 20. In Fig. 4 ist zu erkennen, dass der in Fig. 3 noch links liegende Bereich 22 mit kleinerem Radius nun um einen Winkel A nach unten verdreht angeordnet ist. Dieser Winkel A beträgt bei der dargestellten Ausführungsform etwa 50°. In Fig. 4 ist auch noch die aus Fig. 3 entnommene Winkellage des Bereichs 22 in der Schnittebene A-A durch geschwärzte Bereiche zu erkennen. Ausgehend von der Schnittebene A-A in Fig. 1 ändert sich die Winkellage der Bereiche 22 mit kleinerem Radius und die Winkellage der Bereiche 24 mit größerem Radius also in Richtung auf den Kopf 16 zu bei jeder Rippe 20 um 10°. Nach fünf Rippen und in der Schnittebene B-B ist dann die Winkellage der Bereiche mit kleinerem Radius 22 und die Winkellage der Bereiche mit größerem Radius 24 um 50° gegenüber der Winkellage an der Schnittebene A-A gegen den Uhrzeigersinn verdreht. Über die gesamte Länge des Schafts 12 gesehen ergibt sich dadurch die wendelförmige Verdrehung der polylobularen Querschnitte der Rippen 20 oder die Verwindung der polylobularen Querschnitte über die Länge des Schafts 12 gesehen.

Fig. 5 zeigt eine isometrische Darstellung des Verbindungselements 10 der Fig. 1 von schräg oben. Die Scheitelpunkte der Bereiche mit kleinerem Radius 22 sind an den einzelnen Rippen 20 wieder mit Strichen angedeutet und insgesamt lässt sich die wendelförmige Verwindung der polylobularen Querschnitte der Rippen 20 über die Länge des Schafts 12 gesehen erkennen.

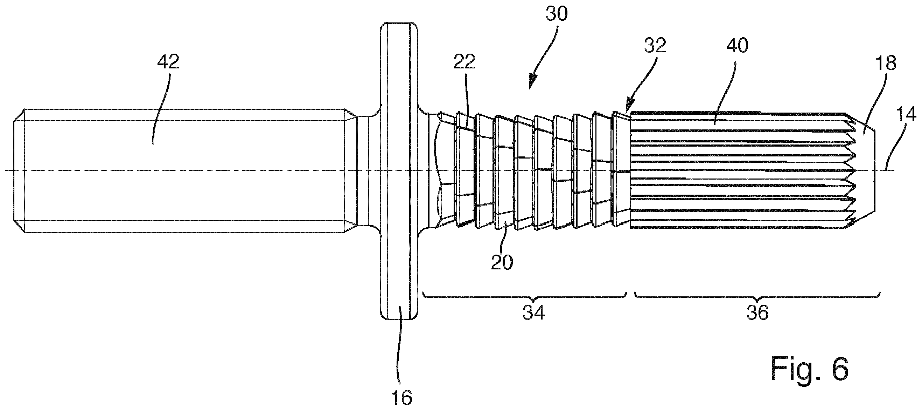

Fig. 6 zeigt ein erfindungsgemäßes Verbindungselement 30 gemäß einer weiteren Ausführungsform der Erfindung. Das Verbindungselement 30 weist einen Schaft 32 auf, der sich entlang einer Mittellängsachse 14 zwischen einem kegelstumpfförmigen Ende 18 und einem Kopf 16 erstreckt. Der Schaft 32 weist zwei Teilabschnitte 34 und 36 auf.

Im Teilabschnitt 34, der sich ausgehend von dem Kopf 16 erstreckt, sind, wie bei dem Verbindungselement 10 der Fig. 1, mehrere sich in Umfangsrichtung erstreckende Rippen 20 vorgesehen. Im Teilabschnitt 34 ist der Schaft 32 gleich ausgebildet wie der Schaft 12 des Verbindungselements 10 der Fig. 1. Die einzelnen Rippen 20 weisen jeweils einen polylobularen Querschnitt mit drei Bereichen 22 mit kleinerem Radius und drei Bereichen 24 mit größerem Radius auf und die Winkellage der Bereiche 22 mit kleinerem Radius und der Bereiche 24 mit größerem Radius ändert sich in Längsrichtung des Schafts 32. Dies ist anhand der mit Strichen markierten Bereiche 22 mit kleinerem Radius in Fig. 6 zu erkennen.

Der Teilabschnitt 34 des Schafts 32 weist aber lediglich neun aufeinanderfolgende Rippen 20 auf und geht dann in den Teilabschnitt 36 über, in dem Rippen 40 vorgesehen sind, die sich in axialer Richtung erstrecken. Die Rippen 40 weisen jeweils einen dreieckförmigen Querschnitt auf. Ein Querschnitt des Schafts 32 im Teilabschnitt 36 ist allgemein kreisförmig. Die parallel zur Mittellängsachse 14 verlaufenden außenliegenden Kanten der Rippen 40 liegen somit alle auf einem Kreis um die Mittellängsachse 14.

Im Rahmen der Erfindung kann der Querschnitt des Schafts 32 auch im Teilabschnitt 36 polylobular mit mehreren Bereichen mit kleinerem Radius und mehreren Bereichen mit größerem Radius ausgebildet sein. Die Winkellage der Bereiche mit kleinerem Radius und größerem Radius kann dabei konstant sein, so dass der Schaft im Teilabschnitt 36 polylobular und zylindrisch ausgebildet ist. Alternativ kann sich die Winkellage der Bereich mit kleinerem Radius und größerem Radius in Längsrichtung des Schafts 32 auch im Teilabschnitt 36 ändern. Bevorzugt ist eine Winkeländerung der Bereiche mit kleinerem Radius und der Bereiche mit größerem Radius pro Millimeter Länge des Schafts 32 um 10° bis 40°, insbesondere um 10° bis 20°.

Gegenüber dem Schaft 32, in Fig. 6 also auf der linken Seite des Kopfes 16, ist das Verbindungselement 30 mit einem Gewindebolzen 42 versehen. Nach dem Einpressen oder Einbetten des Verbindungselements 30 in ein Bauteil kann an dem Gewindebolzen 42 ein weiteres Bauteil befestigt und beispielsweise mit einer Mutter auf dem Gewindebolzen 42 gesichert werden.

Nach dem Einpressen oder Einbetten des Schafts 32 des Verbindungselements 30 in ein Bauteil sorgt der Teilabschnitt 36 des Schafts 32 für eine Verdrehsicherung des Verbindungselements 30, also gegenüber einer Verdrehung um die Mittellängsachse 14. Der Teilabschnitt 34 des Schafts 32 sorgt, wie anhand des Verbindungselements 10 der Fig. 1 erläutert wurde, für eine Auszugssicherung entlang der Mittellängsachse 14, in Fig. 6 also nach links.

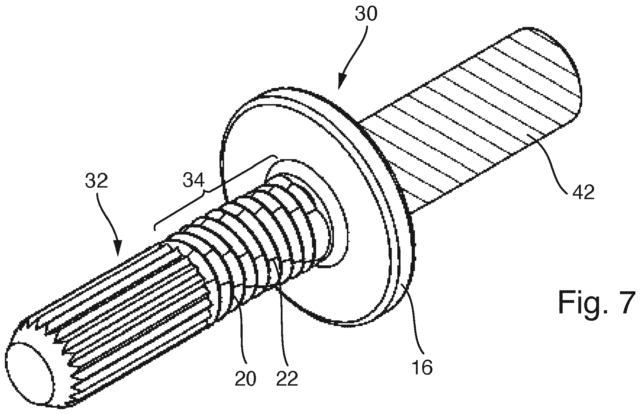

Fig. 7 zeigt eine isometrische Darstellung des Verbindungselements 30 der Fig. 6 von schräg oben. Der Gewindebolzen 42 ist in Fig. 7 lediglich schematisch dargestellt. Zu erkennen ist die Lage der Bereiche 22 mit kleinerem Radius am Schaft 32 und speziell im Teilabschnitt 34. Die Bereiche 22 mit kleinerem Radius der einzelnen Rippen 20 fluchten nicht zueinander, sondern sind in Längsrichtung des Schafts 32 gesehen versetzt zueinander angeordnet.

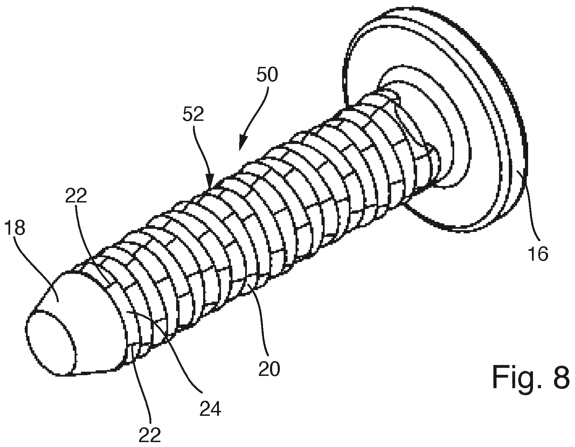

Fig. 8 zeigt ein Verbindungselement 50 gemäß einer weiteren Ausführungsform der Erfindung in einer isometrischen Darstellung von schräg oben. Das Verbindungselement 50 weist einen Schaft 52 mit zahlreichen, in Umfangsrichtung verlaufenden Rippen 20 auf. Der Querschnitt der Rippen 20 entspricht dem bereits anhand der Fig. 1 erläuterten Querschnitt. Insgesamt weist der Schaft 52 dadurch eine sägezahnartige Kontur auf.

Das Verbindungselement 50 weist einen Kopf 16 sowie ein kegelstumpfförmig ausgebildetes freies Ende 18 auf.

Die einzelnen Rippen 20 sind gleich ausgebildet, wie anhand der Fig. 1 bis 5 erläutert wurde. Unterschiedlich zum Verbindungselement 10 der Fig. 1 ist bei dem Verbindungselement 50 der Fig. 8 aber die Änderung der Winkellage der Bereiche 22 mit kleinerem Durchmesser und der Bereiche 24 mit größerem Durchmesser an jeder Rippe 20. Dies ist bereits in Fig. 8 anhand der Anordnung der Striche an jeder Rippe 20, die die Lage der Scheitelpunkte der Bereiche 22 mit kleinerem Durchmesser markieren, zu erkennen.

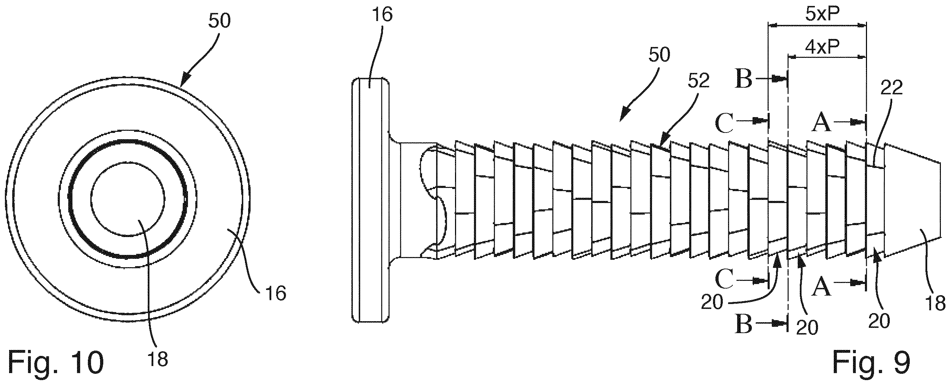

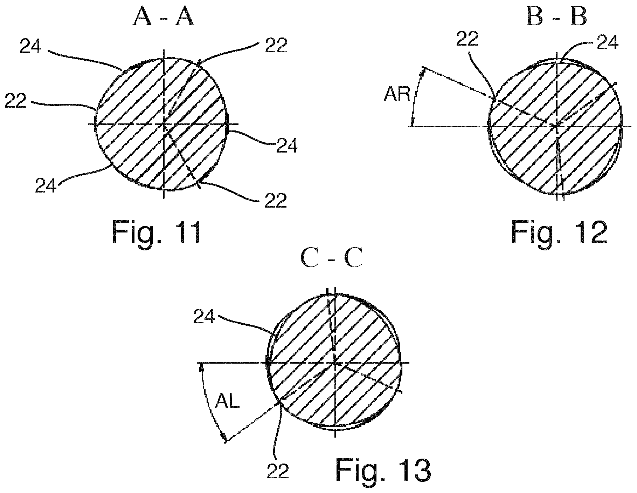

Fig. 9 zeigt eine Seitenansicht des Verbindungselements 50 der Fig. 8 und Fig. 10 zeigt eine Vorderansicht des Verbindungselements 50 der Fig. 9, in Fig. 9 also von rechts. Bei dem Verbindungselement 50 der Fig. 8 bis 10 ändert sich die Winkellage der Bereiche 22 mit kleinerem Durchmesser und der Bereiche 24 mit größerem Durchmesser von Rippe 20 zu Rippe 20 zum Teil im Uhrzeigersinn und zum Teil gegen den Uhrzeigersinn. Fig. 11 zeigt eine Ansicht auf die Schnittebene A-A in Fig. 9. In Fig. 11 lässt sich die Winkellage der Bereiche 22 mit kleinerem Durchmesser und der Bereiche 24 mit größerem Durchmesser an der, siehe Fig. 9, ersten Rippe 20 erkennen, die in Richtung auf den Kopf 16 zu unmittelbar auf das kegelstumpfförmige Ende 18 folgt. Der in Fig. 11 links dargestellte Bereich 22 mit kleinerem Durchmesser liegt auf einer waagrechten Linie.

Fig. 12 zeigt eine Ansicht auf die Schnittebene B-B in Fig. 9. Fig. 12 zeigt also die Winkellage der Bereiche 22 mit kleinerem Durchmesser und der Bereiche 24 mit größerem Durchmesser an der ausgehend vom kegelstumpfförmigen Ende 18 fünften Rippe 20. Es ist zu erkennen, dass der in Fig. 12 links liegende Bereich 22 mit kleinerem Durchmesser gegenüber einer waagrechten Linie um einen Winkel AR im Uhrzeigersinn verdreht angeordnet ist.

Fig. 13 zeigt eine Ansicht auf die Schnittebene C-C in Fig. 9 und stellt dadurch die Winkellage der Bereiche 22 mit kleinerem Durchmesser und die Winkellage der Bereiche 24 mit größerem Durchmesser an der vom kegelstumpfförmigen Ende 18 ausgehend sechsten Rippe 20 des Schafts 52 dar. Es ist Fig. 13 zu entnehmen, dass der in Fig. 13 links liegende Bereich 22 mit kleinerem Durchmesser gegenüber einer waagrechten Linie um einen Winkel AL entgegen dem Uhrzeigersinn verdreht angeordnet ist.

Die Winkellage der Bereiche 22 mit kleinerem Durchmesser und der Bereiche 24 mit größerem Durchmesser ändert sich also in Längsrichtung des Schafts 52 gesehen zum Teil im Uhrzeigersinn oder in negativer Drehrichtung, zum Teil gegen den Uhrzeigersinn oder in positiver Drehrichtung. Dadurch kann erreicht werden, dass Bereiche 22 mit kleinerem Durchmesser an den einzelnen Rippen 20, die ja in radialer Richtung vorragen, erst nach einer vergleichsweise großen Anzahl von Rippen miteinander fluchten bzw. in der Projektion aufeinanderliegen. Dadurch kann eine Auszugskraft des Verbindungselements 50 noch weiter verbessert werden.

Anhand der in Fig. 9 mittels Strichen an den einzelnen Rippen 20 angedeuteten Lage der Bereiche 22 mit kleinerem Durchmesser lässt sich erkennen, dass ausgehend von dem kegelstumpfförmigen Ende 18 die Winkellage der Bereiche 22 zwischen der ersten Rippe 20 und der zweiten Rippe 20 zunächst im Uhrzeigersinn geändert wird, von der zweiten Rippe auf die dritte Rippe aber wieder im Uhrzeigersinn geändert wird.

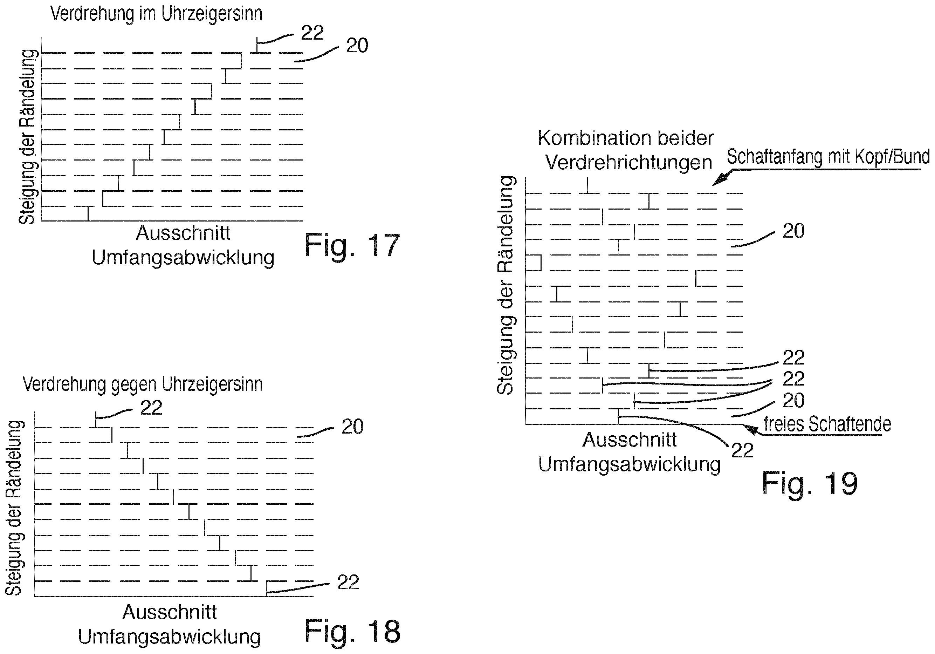

Eine detaillierte Erläuterung der möglichen Änderungsrichtungen und Anordnungen der Bereiche 22 mit kleinerem Durchmesser und der Bereiche 24 mit größerem Durchmesser entlang des Schafts eines Verbindungselements erfolgt noch anhand der Fig. 17 bis 19.

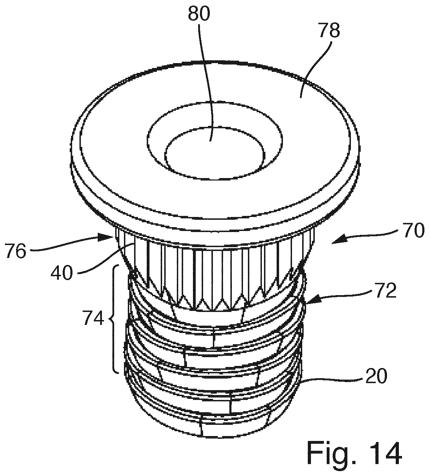

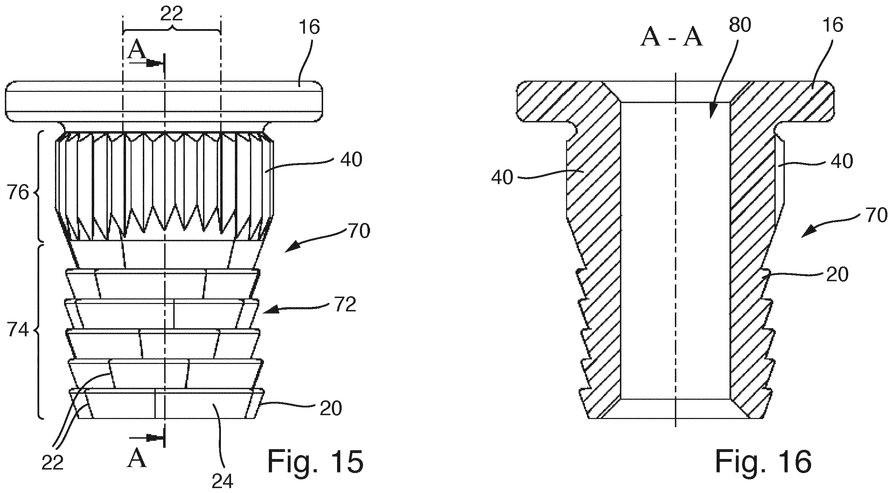

Fig. 14 zeigt eine isometrische Darstellung eines weiteren erfindungsgemäßen Verbindungselements 70. Das Verbindungselement 70 weist einen Schaft 72 mit zwei Teilabschnitten 74 und 76 auf. Im Teilabschnitt 74 sind Rippen 20 in Umfangsrichtung angeordnet, im Teilabschnitt 76 verlaufen Rippen 40 in axialer Richtung. An den Teilabschnitt 76 schließt sich ein Kopf 78 an. Das Verbindungselement 70 ist mit einer Durchgangsbohrung oder Durchgangsöffnung 80 versehen, vgl. auch Fig. 16. Das Verbindungselement 70 kann in ein Bauteil eingebettet oder eingepresst werden und stellt dann mittels der Durchgangsöffnung 80 eine Kernlochbohrung zur Verfügung, in die ein weiteres Bauteil beispielsweise eingesetzt werden kann oder in die eine Befestigungsschraube eingedreht werden kann.

Fig. 15 zeigt eine Seitenansicht des Verbindungselements 70 der Fig. 14. Im Teilabschnitt 74 des Schafts 72 sind insgesamt fünf Rippen 20 hintereinander angeordnet, die wie die Rippen 20 des Verbindungselements 10 der Fig. 1 ausgebildet sind und daher nicht erneut erläutert werden. Die Bereiche 22 mit kleinerem Radius des Umfangs des Schafts 22 im Bereich der einzelnen Rippen 20 sind in Fig. 15 wieder mit Strichen angedeutet. Es ist zu erkennen, dass sich die Lage der Bereiche 22 mit kleinerem Radius und infolgedessen auch die Lage der Bereiche mit größerem Radius von Rippe 20 zu Rippe 20 im Uhrzeigersinn ändert.

Im Teilabschnitt 76, der zwischen dem Ende des Teilabschnitts 74 und dem Kopf 16 liegt, sind die sich in axialer Richtung erstreckenden Rippen 40 angeordnet. Ein Querschnitt des Schafts 72 im Teilabschnitt 76 ist aber ebenfalls polylobular ausgebildet und weist drei Bereiche mit kleinerem Radius und drei Bereiche 24 mit größerem Radius auf. In der Darstellung der Fig. 15 ist ein Bereich 22 mit kleinerem Radius dem Betrachter zugewandt. Auch im Teilabschnitt 76 weist der Schaft 72 dadurch einen polylobularen Querschnitt auf. Dadurch kann eine Sicherung gegen Verdrehen um eine Mittellängsachse des Verbindungselements 70 erhöht werden.

Fig. 16 zeigt eine Ansicht auf die Schnittebene A-A in Fig. 15.

Fig. 17 zeigt schematisch einen Ausschnitt einer Umfangsabwicklung eines erfindungsgemäßen Verbindungselements, bei dem eine Änderung oder Verdrehung der Winkellage der Bereiche mit kleinerem Radius oder größerer Krümmung und der Bereiche mit größerem Radius oder kleinerer Krümmung entlang des Schafts im Uhrzeigersinn erfolgt. Die einzelnen Zeilen der Abwicklung stellen dabei in Umfangsrichtung verlaufende Rippen 20 dar und mittels senkrechten Strichen sind die Scheitelpunkte von Bereichen 22 mit kleinerem Radius dargestellt. Es ist Fig. 17 zu entnehmen, dass sich von Rippe zu Rippe die Winkellage der Bereiche 22 mit kleinerem Radius um einen konstanten Betrag ändert. Entlang des Schafts eines Verbindungselements gesehen ergibt sich dadurch eine wendelförmige Anordnung der Scheitelpunkte der Bereiche 22 mit kleinerem Radius, wie dies anhand der Fig. 1 erläutert wurde.

Fig. 18 zeigt eine der Darstellung der Fig. 17 ähnliche Darstellung. Fig. 18 zeigt eine Änderung oder Verdrehung der Winkellage der Bereiche 22 mit kleinerem Radius gegen den Uhrzeigersinn, wobei von Rippe 20 zu Rippe 20 sich die Winkellage um einen konstanten Betrag ändert. Auch bei einer solchen Ausführungsform ergibt sich eine wendelförmige Aneinanderreihung der Bereiche 22 mit kleinerem Radius über die Länge des Schafts eines Verbindungselements gesehen, wie sie bereits anhand der Fig. 1 erläutert wurde.

Fig. 19 zeigt eine schematische Darstellung eines Ausschnitts einer Umfangsabwicklung eines erfindungsgemäßen Verbindungselements in einer den Fig. 17 und 18 vergleichbaren Darstellung. Anhand der Fig. 19 soll eine Änderung oder Verdrehung der Winkellage der Bereiche 22 mit kleinerem Radius und der Bereiche 24 mit größerem Radius in unterschiedlichen Richtungen, also im Uhrzeigersinn und entgegen dem Uhrzeigersinn, erläutert werden.

In Fig. 19 unten ist eine erste Rippe 20 am freien Schaftende des Verbindungselements dargestellt, anhand eines Vergleichs mit der Fig. 9 wäre dies die in Fig. 9 rechts dargestellte erste Rippe 20, die auf das kegelstumpfförmige Ende 18 folgt. Diese Rippe 20 weist einen in Fig. 19 mittig angeordneten Bereich 22 mit kleinerem Radius auf. Die Bereiche 22 mit kleinerem Radius beispielsweise der Scheitelpunkte können auch als Hochpunkte des polylobularen Querschnitts bezeichnet werden.

Ausgehend von dieser ersten Rippe 20 wird die Winkellage des Bereichs 22 dann zur folgenden Rippe im Uhrzeigersinn geändert. In Fig. 19 ist der Bereich 22 der zweiten Rippe also rechts des Bereichs 22 der ersten Rippe angeordnet. Bei der darauffolgenden Rippe erfolgt aber eine Änderung der Winkellage entgegen dem Uhrzeigersinn und zwar gegenüber der Winkellage des Bereichs 22 an der ersten Rippe um denselben Betrag des Winkels wie von der ersten Rippe 20 zur zweiten Rippe 20. Der Bereich 22 ist an der dritten Rippe in Fig. 19 somit links von dem Bereich 22 an der ersten Rippe dargestellt. An der vierten Rippe erfolgt wieder eine Änderung der Winkellage im Uhrzeigersinn, und zwar um denselben Betrag des Winkels bezogen auf die Winkellage an der zweiten Rippe. An der fünften Rippe erfolgt wieder eine Änderung der Winkellage entgegen dem Uhrzeigersinn, und zwar um denselben Betrag des Winkels bezogen auf die Lage an der dritten Rippe.

Entlang des Schafts gesehen, vgl. auch Fig. 9, liegen die Bereiche 22 mit kleinerem Radius an den gerade nummerierten Rippen, also an der zweiten Rippe, an der vierten Rippe, an der sechsten Rippe, an der achten Rippe und an der zehnten Rippe. Es ergibt sich die Form einer im Uhrzeigersinn um den Schaft verlaufenden Wendel. An den Rippen mit ungerader Nummerierung, also an der dritten Rippe, fünften Rippe, siebten Rippe, neunten Rippe und elften Rippe, liegen die Bereiche 22 mit kleinerem Radius dahingegen auf einer gegen den Uhrzeigersinn drehenden Wendel entlang dem Schaft.

Fig. 19 ist weiter zu entnehmen, dass an der zwölften Rippe 20 wieder dieselbe Lage der Bereiche 22 mit kleinerem Radius und der Bereiche 24 mit größerem Radius erreicht ist wie an der ersten Rippe.

Anhand der Darstellung der Fig. 19 ist gut zu erkennen, dass die Bereiche 22 mit kleinerem Radius oder die Hochpunkte der polylobularen Querschnitte erst nach zwölf Rippen wieder in einer Flucht liegen oder in der Projektion übereinanderliegen. Dadurch können alle Rippen zuverlässig in das Material eines Kernlochs eingreifen, in das sie eingepresst oder eingebettet werden, und eine äußerst zuverlässige Verankerung mit sehr hoher Auszugskraft kann erzielt werden.

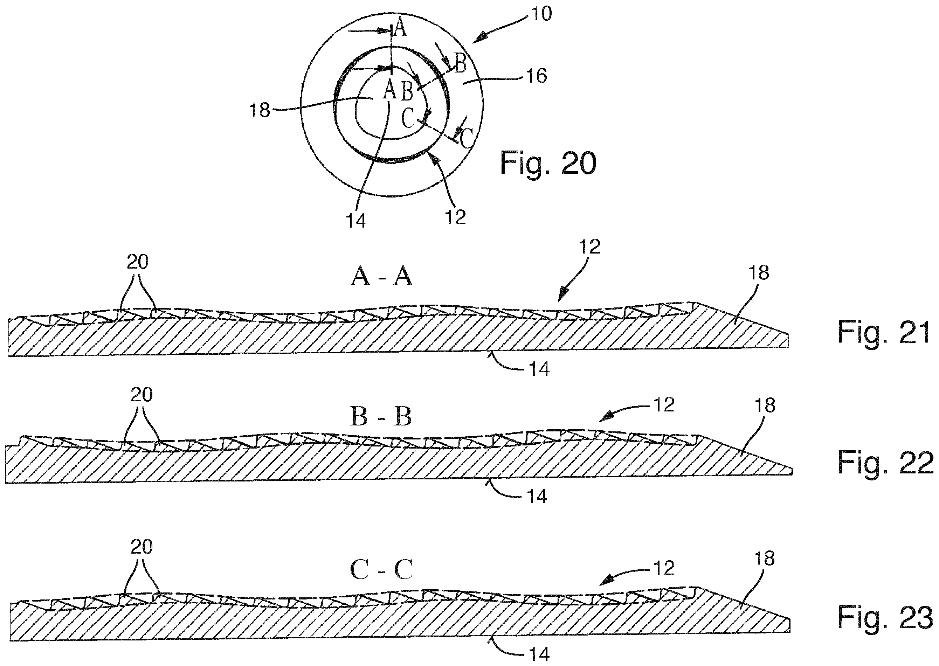

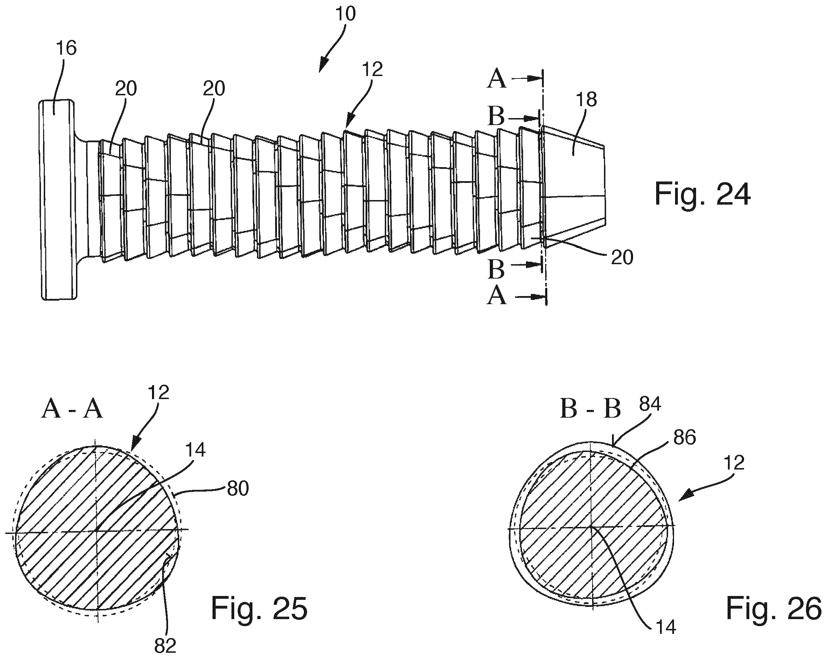

Fig. 20 zeigt eine Ansicht eines weiteren erfindungsgemäßen Verbindungselements 10 von unten. Das Verbindungselement 10 ist im Wesentlichen gleich ausgebildet wie das Verbindungselement 10 der Fig. 1, wobei die kleinen Unterschiede anhand von Fig. 24 erläutert werden.

Gut zu erkennen sind der Kopf 16 und der im Querschnitt polylobular ausgebildete Schaft 12 mit der kegelstumpfartigen Verjüngung 18. In Fig. 20 sind drei Schnittebenen A-A, B-B und C-C eingezeichnet, die parallel zur Mittellängsachse 14, siehe auch Fig. 1, verlaufen und die jeweils die Mittellängsachse enthalten, mithin also radial ausgerichtet sind. Die Schnittachsen A-A, B-B und C-C sind jeweils unter einem anderen Winkel angeordnet. Zwischen den Schnittebenen A-A und C-C liegt ein Winkel von 120°. Zwischen den Schnittebenen A-A und B-B liegt ein Winkel von 60°. Zwischen den Schnittebenen B-B und C-C liegt ebenfalls ein Winkel von 60°. Da der polylobulare Querschnitt des Schafts 12 drei gleichmäßig um jeweils 120° voneinander beabstandete Bereiche mit kleinerem Radius oder größerer Krümmung aufweist und wobei zwischen den Bereichen mit kleinerem Radius jeweils Bereiche mit größerem Radius oder kleinerer Krümmung angeordnet sind, die ebenfalls gleichmäßig voneinander beabstandet sind, wiederholt sich der Querschnitt zwischen den Schnittebenen A-A und C-C dreimal um den gesamten Umfang des Schafts 12. Der Übersichtlichkeit halber sind daher lediglich die drei Schnittebenen A-A, B-B und C-C eingezeichnet.

Fig. 21 zeigt eine abschnittsweise Darstellung der Ansicht auf die Schnittebene A-A. Es ist zu erkennen, dass der Schaft 12 in der Schnittebene A-A eine wellenförmige Außenkontur zeigt. Es ist weiter zu erkennen, dass sich entlang der Länge des Schafts 12 eine Profiltiefe der Rippen 20 nur geringfügig ändert. Im Rahmen der Erfindung soll sich die Profiltiefe der Rippen 20 um maximal 50 % ändern. Bei der dargestellten Ausführungsform ändert sich die Profiltiefe der Rippen 20 lediglich um maximal 10 %.

Fig. 22 zeigt eine Ansicht auf die Schnittebene B-B in Fig. 20. Auch in dieser Schnittebene weist der Schaft 12 eine wellenförmige Außenkontur auf. Auch in dieser Schnittebene ist zu erkennen, dass sich eine Profiltiefe der Rippen 20 über die Länge des Schafts 12 gesehen lediglich geringfügig und bei der dargestellten Ausführungsform um maximal etwa 10 % ändert.

Fig. 23 zeigt eine Ansicht auf die Schnittebene C-C in Fig. 20. Da die Schnittebene C-C um die Mittellängsachse 14 gesehen um 120° von der Schnittebene A-A beabstandet ist, entspricht die Ansicht auf die Schnittebene C-C der Ansicht auf die Schnittebene A-A. Auch in der Schnittebene C-C weist der Schaft 12 eine wellenförmige Außenkontur auf und die Profilhöhe der Rippen 20 verändert sich über die Länge des Schafts gesehen lediglich geringfügig.

Anhand der Fig. 20 bis 23 ist auch zu erkennen, dass der Schaft 12 an jeder Stelle einen polylobularen Querschnitt aufweist. Sowohl der Außendurchmesser des Schafts als auch der Kerndurchmesser des Schafts zwischen den Rippen 20 ist jeweils polylobular ausgebildet. Dies ist an der Wellenform der Außenkontur des Schafts 12 in den Fig. 21, 22 und 23 zu erkennen sowie dann auch an der gedachten Verbindungslinie der Täler zwischen den Rippen 20, die ebenfalls eine Wellenform hat. Diese innere, gestrichelt eingezeichnete Linie, die die Wellentäler zwischen den Rippen 20 verbindet, verdeutlicht den Kerndurchmesser. Anhand der Fig. 21 bis 23 ist gut zu erkennen, dass sowohl der Außendurchmesser des Schafts 12 als auch der Kerndurchmesser einen polylobularen Verlauf zeigen. Der Außendurchmesser oder die Außenkontur wird durch die in den Fig. 21, 22 und 23 eingezeichnete, gedachte gestrichelte Linie dargestellt, die die Wellenberge, somit die äußeren Abschnitte der Rippen 20, miteinander verbindet.

Fig. 24 zeigt eine Seitenansicht des Verbindungselements der Fig. 20. Zu erkennen ist der Kopf 16 sowie der Schaft 12 mit den Rippen 20 und der kegelstumpfartigen Verjüngung 18. Das Verbindungselement 10 der Fig. 24 ist mit Ausnahme des geringeren Abstands zwischen der dem Kopf 16 am nächsten liegenden Rippe 20 und dem Kopf 16 gleich ausgebildet wie das Verbindungselement 10 der Fig. 1. Zu dem Verbindungselement 10 der Figur 1 identisch ausgebildete Elemente des Verbindungselements 10 werden daher nicht erneut erläutert und tragen die gleichen Bezugszeichen.

In Fig. 24 sind zwei Schnittebenen A-A und B-B eingezeichnet. Die Schnittebene A-A verläuft durch die Stelle der Verjüngung 18 mit dem größten Durchmesser. Diese Stelle der Verjüngung 18 mit größtem Durchmesser entspricht in ihren Außenabmessungen den Außenabmessungen der Rippen 20, ist aber, wie bereits erläutert wurde, gegenüber den übrigen Rippen 20 um die Mittellängsachse verdreht.

Die Schnittebene B-B verläuft durch das Tal zwischen der Stelle der Verjüngung 18 mit dem größten Durchmesser und der in Richtung auf den Kopf 16 auf die Verjüngung 18 folgenden Rippe 20. In der Schnittebene B-B ist somit der Verlauf des Kerndurchmessers oder der Querabmessung des Schafts 12 zwischen zwei Rippen 20 zu erkennen. Die Abmessungen des Schafts 12 in der Schnittebene B-B entsprechen dabei bezüglich ihrer Größe den Abmessungen des Schafts 12 zwischen jeweils zwei Rippen 20. Wie erläutert wurde, ist der Querschnitt in der Schnittebene B-B gegenüber den Querschnitten zwischen zwei beliebigen Rippen 20 aber um die Mittellängsachse 14 verdreht.

Fig. 25 zeigt eine Ansicht auf die Schnittebene A-A in Fig. 24. Der Blick geht in Verjüngungsrichtung der Verjüngung 18. Durch diese Blickrichtung ist lediglich der Außendurchmesser bzw. die größten Querabmessungen der Verjüngung 18 zu erkennen, weshalb diese Lage der Schnittebene A-A gewählt wurde. In Fig. 25 ist zu erkennen, dass der Querschnitt in der Schnittebene A-A polylobular ausgebildet ist. Dies ist anhand der durchgezogenen Linie in Fig. 25 gut zu erkennen. Alle Rippen 20 weisen einen solchen polylobularen Querschnitt auf, wie er in Fig. 25 dargestellt ist, lediglich die Winkellage um die Mittellängsachse 14 ändert sich, wie vorstehend eingehend erörtert wurde.

Zusätzlich eingezeichnet ist in Fig. 25 ein gedachter Hüllkreis 80, der mittels einer gestrichelten Linie eingetragen wurde. Weiter ist ein gedachter Pferchkreis oder Innenkreis 82 dargestellt, der ebenfalls mittels einer gestrichelten Linie angedeutet ist. Wie bereits beschrieben wurde, berühren drei Bereiche mit größerem Radius und kleinerer Krümmung im Abstand von 120° um die Mittellängsachse den Hüllkreis 80 und drei Bereiche mit kleinerem Radius und größerer Krümmung berühren den Pferchkreis oder Innenkreis 82.

Fig. 26 zeigt die Ansicht auf die Schnittebene B-B in Fig. 24. Anhand der Fig. 25 und der Fig. 26 ist zu erkennen, dass der Schaft 12 sowohl zwischen den Rippen 20 als auch an den höchsten Stellen der Rippen 20 jeweils eine polylobulare Form aufweist. In Fig. 26 ist auch die Außenkontur der Verjüngung 18 an deren Stelle mit größten Querabmessungen zu erkennen. Diese ist mittels eines durchgezogenen Kreises 84 dargestellt. Die Außenkontur in der Schnittebene B-B ist mittels einer durchgezogenen Linie 86 dargestellt. Es ist Fig. 26 zu entnehmen, dass sich eine Profiltiefe, also ein Abstand in radialer Richtung ausgehend von der Mittellängsachse 14 zwischen den Linien 86 und 84 über den Umfang des Schafts 12 nur geringfügig ändert. Bei der dargestellten Ausführungsform ändert sich die Profiltiefe lediglich um etwa 10 %.

Es ist in Fig. 26 auch zu erkennen, dass sich die Winkellage der größten Querabmessungen in der Schnittebene B-B und der Winkel der größten Querabmessungen in der Schnittebene A-A, also zwischen den Linien 86 und 84, ändert. Bei der Linie 84, entsprechend dem Querschnitt in der Schnittebene A-A, liegt eine größte Querabmessung senkrecht über der Mittellängsachse 14. Bei der Linie 86 liegt die größte Querabmessung hingegen ein Stück weit nach links bzw. entgegen dem Uhrzeigersinn versetzt. Wie bereits erörtert wurde, ändert sich die Winkellage der größten Querabmessungen der Rippen 20 von Rippe zu Rippe.

## Patentansprüche

1. Verbindungselement (10; 30; 50; 70) zum Einpressen oder Einbetten in ein Bauteil mit einem Schaft (12; 32; 52; 72), der sich entlang einer Mittellängsachse (14) des Verbindungselements (10; 30; 50; 70) erstreckt, wobei der Schaft (12; 32; 52; 72) mit sich in radialer Richtung zum Schaft (12; 32; 52; 72) erstreckenden Rippen (20) versehen ist und wobei der Schaft (12; 32; 52; 72) wenigstens abschnittsweise einen polylobularen Querschnitt aufweist, wobei der Umfang des polylobularen Querschnitts über seine gesamte Länge konvex gekrümmt ist, und, in radialer Richtung gesehen, Bereiche (24) mit größerem Radius oder kleinerer Krümmung und Bereiche (22) mit kleineren Radius oder größerer Krümmung aufweist, **dadurch gekennzeichnet, dass** entlang der Mittellängsachse (14) gesehen sich eine Winkellage der Bereiche (22) mit kleinerem Radius oder größerer Krümmung und der Bereiche (24) mit größerem Radius oder kleinerer Krümmung entlang des Schafts (12; 32; 52; 72) ändert.

2. Verbindungselement nach Anspruch 1, **dadurch gekennzeichnet, dass** sich die Winkellage der Bereiche (22) mit kleinerem Radius oder größerer Krümmung und der Bereiche (24) mit größerem Radius oder kleinerer Krümmung um einen konstanten Betrag pro Längeneinheit entlang des Schafts (12; 32; 52; 72) ändert.

3. Verbindungselement nach Anspruch 1 oder 2, **dadurch gekennzeichnet, dass** der polylobulare Querschnitt n Bereiche (22) mit kleinerem Radius oder größerer Krümmung aufweist und dass sich die Winkellage entlang der vollständigen Länge des Schafts um einen Winkel von 360Grad/n ändert.

4. Verbindungselement nach wenigstens einem der vorstehenden Ansprüche, **dadurch gekennzeichnet, dass** sich entlang der Länge des Schafts gesehen Bereiche mit unterschiedlichen poylolobularen Querschnitten abwechseln.

5. Verbindungselement nach wenigstens einem der vorstehenden Ansprüche, **dadurch gekennzeichnet, dass** sich entlang der Länge des Schafts gesehen Bereiche mit kreisrundem Querschnitt und polylobularem Querschnitt abwechseln.

6. Verbindungselement nach einem der vorstehenden Ansprüche, **dadurch gekennzeichnet dass** in dem Abschnitt des Schafts (12; 32; 52; 72) mit polylobularen Querschnitt an jeder Stelle des Abschnitts der Schaft einen polylobularen Querschnitt aufweist.

7. Verbindungselement nach einem der vorstehenden Ansprüche, **dadurch gekennzeichnet dass** in dem Abschnitt des Schafts (12; 32; 52; 72) mit polylobularem Querschnitt bei jeder Winkellage um die Mittellängsachse eine Schnittansicht des Schafts (12; 32; 52; 72) eine wellenförmige Außenkontur zeigt und in der Schnittansicht eine gedachte Linie, die die tiefsten Punkte zwischen zwei Rippen (20) verbindet, wellenförmig verläuft.

8. Verbindungselement nach Anspruch 7, **dadurch gekennzeichnet, dass** sich die Winkellage der Bereiche (22) mit kleinerem Radius oder größerer Krümmung und der Bereiche (24) mit größerem Radius oder kleinerer Krümmung in Längsrichtung des Schafts gesehen bei jeder Rippe um 10° bis 40° ändert.

9. Verbindungselement nach einem der vorstehenden Ansprüche, **dadurch gekennzeichnet dass** in den Abschnitt des Schafts (12; 32; 52; 72) mit polylobularem Querschnitt sich eine Profiltiefe der Rippen (20) um maximal 50 %, insbesondere um maximal 10%, verändert, insbesondere konstant ist.

10. Verbindungselement nach einem der vorstehenden Ansprüche, **dadurch gekennzeichnet, dass** der Querschnitt als Gleichdick ausgebildet ist.

11. Verbindungselement nach einem der vorstehenden Ansprüche, **dadurch gekennzeichnet, dass** der Querschnitt drei Bereiche (22) mit kleinerem Radius oder größerer Krümmung und drei Bereiche (24) mit größerem Radius oder kleinerer Krümmung aufweist.

12. Verbindungselement nach einem der vorstehenden Ansprüche, **dadurch gekennzeichnet, dass** der Umfang des Querschnitts kontinuierlich ohne Ecken ausgebildet ist.

13. Verbindungselement nach Anspruch 11 oder 12, **dadurch gekennzeichnet, dass** sich die Winkellage der Bereiche (22) mit kleinerem Radius oder größerer Krümmung und der Bereiche (24) mit größerem Radius oder kleinerer Krümmung entlang der Mittellängsachse (14) gesehen im Uhrzeigersinn und/oder entgegen dem Uhrzeigersinn ändert.

14. Verbindungselement nach einem der vorstehenden Ansprüche, **dadurch gekennzeichnet, dass** die Rippen (20) wenigstens teilweise in Umfangsrichtung verlaufen und/oder dass die Rippen (40) wenigstens teilweise in axialer Richtung verlaufen.

15. Verbindungselement nach einem der vorstehenden Ansprüche, **dadurch gekennzeichnet, dass** die Rippen (20) über wenigstens einen Teilbereich der Länge des Schafts in Umfangsrichtung verlaufen und dass die Rippen (40) über wenigstens einen Teilbereich der Länge des Schafts in axialer Richtung verlaufen.

16. Verbindungselement nach wenigstens einem der vorstehenden Ansprüche, **dadurch gekennzeichnet, dass** die Rippen (20) wenigstens über einen Teilbereich der Länge des Schafts in Umfangsrichtung verlaufen und dass sich die Winkellage der Bereiche (22) mit kleinerem Radius oder größerer Krümmung und der Bereiche (24) mit größerem Radius oder kleinerer Krümmung ausgehend von einer ersten Rippe abwechselnd in positiver Richtung und in negativer Richtung ändert.

17. Verbindungselement nach einem der vorstehenden Ansprüche, **dadurch gekennzeichnet, dass** sich die Winkellage der Bereiche (22) mit kleinerem Radius oder größerer Krümmung und der Bereiche (24) mit größerem Radius oder kleinerer Krümmung pro Millimeter Länge des Schafts um 10 Grad bis 40 Grad, insbesondere um 10 Grad bis 20 Grad, ändert, insbesondere in einem Teilabschnitt des Schafts mit in axialer Richtung verlaufenden Rippen.

## Claims

1. Connecting element (10; 30; 50; 70) for pressing or embedding into a component, having a shank (12; 32; 52; 72) which extends along a central longitudinal axis (14) of the connecting element (10; 30; 50; 70), wherein the shank (12; 32; 52; 72) is provided with ribs (20) which extend in a radial direction in relation to the shank (12; 32; 52; 72), and wherein the shank (12; 32; 52; 72) at least sectionally has a polylobular cross section, wherein the periphery of the polylobular cross section is convexly curved over its entire length and, when seen in the radial direction, has regions (24) with relatively large radius or relatively small curvature and regions (22) with relatively small radius or relatively large curvature, **characterized in that**, when seen along the central longitudinal axis (14), an angular position of the regions (22) with relatively small radius or relatively large curvature and the regions (24) with relatively large radius or relatively small curvature changes along the shank (12; 32; 52; 72).

2. Connecting element according to Claim 1, **characterized in that** the angular position of the regions (22) with relatively small radius or relatively large curvature and the regions (24) with relatively large radius or relatively small curvature changes by a constant amount per unit of length along the shank (12; 32; 52; 72).

3. Connecting element according to Claim 1 or 2, **characterized in that** the polylobular cross section has n regions (22) with relatively small radius or relatively large curvature, and **in that** the angular position changes by an angle of 360 degrees/n along the entire length of the shank.

4. Connecting element according to at least one of the preceding claims, **characterized in that**, when seen along the length of the shank, regions with different polylobular cross sections alternate.

5. Connecting element according to at least one of the preceding claims, **characterized in that**, when seen along the length of the shank, regions with a circular cross section and with a polylobular cross section alternate.

6. Connecting element according to one of the preceding claims, **characterized in that**, in the portion of the shank (12; 32; 52; 72) with a polylobular cross section, the shank has a polylobular cross section at each point of the portion of the shank.

7. Connecting element according to one of the preceding claims, **characterized in that**, in the portion of the shank (12; 32; 52; 72) with a polylobular cross section, at each angular position around the central longitudinal axis, a sectional view of the shank (12; 32; 52; 72) shows an undulating outer contour and, in the sectional view, an imaginary line connecting the lowest points between two ribs (20) extends in an undulating manner.

8. Connecting element according to Claim 7, **characterized in that**, when seen in the longitudinal direction of the shank, the angular position of the regions (22) with relatively small radius or relatively large curvature and the regions (24) with relatively large radius or relatively small curvature changes by 10° to 40° at each rib.

9. Connecting element according to one of the preceding claims, **characterized in that**, in the portion of the shank (12; 32; 52; 72) with a polylobular cross section, a profile depth of the ribs (20) changes by at most 50%, in particular by at most 10%, in particular is constant.

10. Connecting element according to one of the preceding claims, **characterized in that** the cross section is in the form of a figure of constant width.

11. Connecting element according to one of the preceding claims, **characterized in that** the cross section has three regions (22) with relatively small radius or relatively large curvature and three regions (24) with relatively large radius or relatively small curvature.

12. Connecting element according to one of the preceding claims, **characterized in that** the periphery of the cross section is formed to be continuous without corners.

13. Connecting element according to Claim 11 or 12, **characterized in that**, when seen along the central longitudinal axis (14), the angular position of the regions (22) with relatively small radius or relatively large curvature and the regions (24) with relatively large radius or relatively small curvature changes in the clockwise direction and/or anticlockwise direction.

14. Connecting element according to one of the preceding claims, **characterized in that** the ribs (20) at least partly extend in a peripheral direction, and/or **in that** the ribs (40) at least partly extend in an axial direction.

15. Connecting element according to one of the preceding claims, **characterized in that** the ribs (20) extend in the peripheral direction over at least a part of the length of the shank, and **in that** the ribs (40) extend in the axial direction over at least a part of the length of the shank.

16. Connecting element according to at least one of the preceding claims, **characterized in that** the ribs (20) extend in the peripheral direction at least over a part of the length of the shank, and **in that**, proceeding from a first rib, the angular position of the regions (22) with relatively small radius or relatively large curvature and the regions (24) with relatively large radius or relatively small curvature changes alternately in the positive direction and the negative direction.

17. Connecting element according to one of the preceding claims, **characterized in that** the angular position of the regions (22) with relatively small radius or relatively large curvature and the regions (24) with relatively large radius or relatively small curvature changes by 10 degrees to 40 degrees, in particular by 10 degrees to 20 degrees, per millimetre of length of the shank, in particular in a part of the shank with ribs extending in the axial direction.

## Revendications

1. Élément de liaison (10 ; 30 ; 50 ; 70) destiné à être enfoncé ou enrobé dans un composant, comprenant une tige (12 ; 32 ; 52 ; 72) qui s'étend le long d'un axe longitudinal central (14) de l'élément de liaison (10 ; 30 ; 50 ; 70), la tige (12 ; 32 ; 52 ; 72) étant pourvue de nervures (20) qui s'étendent dans la direction radiale par rapport à la tige (12 ; 32 ; 52 ; 72) et la tige (12 ; 32 ; 52 ; 72) présentant au moins dans certaines portions une section transversale polylobée, la périphérie de la section transversale polylobée étant courbée de manière convexe sur toute sa longueur et possédant, vues dans la direction radiale, des zones (24) de plus grand rayon ou de plus petite courbure et des zones (22) de plus petit rayon ou de plus grande courbure, **caractérisé en ce que**, vu le long de l'axe longitudinal central (14), une position angulaire des zones (22) de plus petit rayon ou de plus grande courbure et des zones (24) de plus grand rayon ou de plus petite courbure varie le long de la tige (12 ; 32 ; 52 ; 72).

2. Élément de liaison selon la revendication 1, **caractérisé en ce que** la position angulaire des zones (22) de plus petit rayon ou de plus grande courbure et des zones (24) de plus grand rayon ou de plus petite courbure varie d'une valeur constante par unité de longueur le long de la tige (12 ; 32 ; 52 ; 72).

3. Élément de liaison selon la revendication 1 ou 2, **caractérisé en ce que** la section transversale polylobée comprend n zones (22) de plus petit rayon ou de plus grande courbure et **en ce que** la position angulaire varie d'un angle de 360 degrés/n sur toute la longueur de la tige.

4. Élément de liaison selon au moins l'une des revendications précédentes, **caractérisé en ce que**, vues sur la longueur de la tige, des zones de sections polylobées différentes alternent.

5. Élément de liaison selon au moins l'une des revendications précédentes, **caractérisé en ce que**, vues sur la longueur de la tige, des zones de section transversale circulaire et des zones de section transversale polylobée alternent.

6. Élément de liaison selon l'une des revendications précédentes, **caractérisé en ce que**, dans la portion de la tige (12 ; 32 ; 52 ; 72) ayant une section transversale polylobée, la tige présente une section transversale polylobée en tout point de la portion.

7. Élément de liaison selon l'une des revendications précédentes, **caractérisé en ce que**, dans la portion de la tige (12 ; 32 ; 52 ; 72) à section transversale polylobée, à chaque position angulaire autour de l'axe longitudinal central, une vue en coupe de la tige (12 ; 32 ; 52 ; 72) présente un contour extérieur ondulé et, dans la vue en coupe, une ligne imaginaire qui relie les points les plus bas entre deux nervures (20) suit un tracé ondulé.

8. Élément de liaison selon la revendication 7, **caractérisé en ce que** la position angulaire des zones (22) de plus petit rayon ou de plus grande courbure et des zones (24) de plus grand rayon ou de plus petite courbure varie, dans la direction longitudinale de la tige, de 10° à 40° à chaque nervure.

9. Élément de liaison selon l'une des revendications précédentes, **caractérisé en ce que** dans la portion de la tige (12 ; 32 ; 52 ; 72) à section transversale polylobée, une profondeur de profil des nervures (20) varie au maximum de 50 %, en particulier au maximum de 10 %, et est notamment constante.

10. Élément de liaison selon l'une des revendications précédentes, **caractérisé en ce que** la section transversale est réalisée sous la forme d'une courbe de largeur constante.

11. Élément de liaison selon l'une des revendications précédentes, **caractérisé en ce que** la section transversale comprend trois zones (22) de plus petit rayon ou de plus grande courbure et trois zones (24) de plus grand rayon ou de plus petite courbure.

12. Élément de liaison selon l'une des revendications précédentes, **caractérisé en ce que** le pourtour de la section transversale est réalisé continu sans coins.

13. Élément de liaison selon la revendication 11 ou 12, **caractérisé en ce que** la position angulaire des zones (22) de plus petit rayon ou de plus grande courbure et des zones (24) de plus grand rayon ou de plus petite courbure, vue le long de l'axe longitudinal central (14), varie dans le sens des aiguilles d'une montre et/ou dans le sens inverse des aiguilles d'une montre.

14. Élément de liaison selon l'une des revendications précédentes, **caractérisé en ce que** les nervures (20) suivent un tracé au moins partiellement dans la direction circonférentielle et/ou **en ce que** les nervures (40) suivent un tracé au moins partiellement dans la direction axiale.

15. Élément de liaison selon l'une des revendications précédentes, **caractérisé en ce que** les nervures (20) suivent un tracé dans la direction circonférentielle sur au moins une zone partielle de la longueur de la tige et **en ce que** les nervures (40) suivent un tracé dans la direction axiale sur au moins une zone partielle de la longueur de la tige.

16. Élément de liaison selon au moins l'une des revendications précédentes, **caractérisé en ce que** les nervures (20) suivent un tracé dans la direction circonférentielle au moins sur une zone partielle de la longueur de la tige et **en ce que** la position angulaire des zones (22) de plus petit rayon ou de plus grande courbure et des zones (24) de plus grand rayon ou de plus petite courbure varie en alternance dans la direction positive et dans la direction négative à partir d'une première nervure.

17. Élément de liaison selon l'une des revendications précédentes, **caractérisé en ce que** la position angulaire des zones (22) de plus petit rayon ou de plus grande courbure et des zones (24) de plus grand rayon ou de plus petite courbure varie de 10 degrés à 40 degrés, en particulier de 10 degrés à 20 degrés, par millimètre de longueur de la tige, notamment dans une portion partielle de la tige pourvue de nervures qui suivent un tracé dans la direction axiale.
